# EUROPEAN PATENT APPLICATION

(11) **EP 4 391 104 A1**
(43) Date of publication of application: **26.06.2024**
(21) Application number: 23784104.4
(22) Date of filing: 27.02.2023
(51) Int. Cl.: H01M 4/13, H01M 4/64

(54) **ELECTRODE PLATE, ELECTRODE ASSEMBLY, BATTERY CELL, BATTERY, AND ELECTRICAL DEVICE**

(30) Priority: 08.04.2022 CN 202220803526 U
(71) Applicant: Contemporary Amperex Technology Co., Limited, Ningde, Fujian 352100 (CN)
(72) Inventor: CHANG, Wen, Ningde, Fujian 352100 (CN); FU, Chenghua, Ningde, Fujian 352100 (CN); GUO, Suogang, Ningde, Fujian 352100 (CN); YE, Yonghuang, Ningde, Fujian 352100 (CN); ZHU, Chang, Ningde, Fujian 352100 (CN); HAN, Wenge, Ningde, Fujian 352100 (CN); ZHANG, Yan, Ningde, Fujian 352100 (CN)
(74) Representative: Gong, Jinping
(86) International application number: PCT/CN2023/078425
(87) International publication number: WO 2023/193540

(57) **Abstract**

This application discloses an electrode plate, an electrode assembly, a battery cell, a battery, and an electrical device. The electrode plate includes: a current collector (20), where the current collector (20) includes a base film layer (22) and metal layers (24), and the metal layers (24) are disposed on the base film layer (22) in a spaced-apart manner; and active material layers (30), where the active material layers (30) are applied to the base film layer (22) in a spaced-apart manner. Each active material layer (30) at least partially covers a corresponding metal layer (24).

## Description

### CROSS-REFERENCE TO RELATED APPLICATIONS

This application is based on and claims priority to Chinese Patent Application No. 202220803526.3, filed on April 8, 2022, which is incorporated herein by reference in its entirety.

### TECHNICAL FIELD

This application relates to the field of batteries, and in particular, to an electrode plate, an electrode assembly, a battery cell, a battery, and an electrical device.

### BACKGROUND

Energy conservation and emission reduction are key to sustainable development of the automobile industry. Electric vehicles have become an important part of the sustainable development of the automobile industry by virtue of energy saving and environmental friendliness. Battery technology is crucial to development of electric vehicles.

An electrode assembly of a battery generally includes a folded electrode assembly and a stacked electrode assembly. In a folded electrode assembly, a positive electrode plate, a negative electrode plate, and a separator located between the positive electrode plate and the negative electrode plate are folded to form the electrode assembly. In a stacked electrode assembly, an electrode plate feedstock is cut into a discrete electrode plate. A discrete positive electrode plate, a discrete negative electrode plate, and a separator located between the positive electrode plate and the negative electrode plate are stacked alternately to form the electrode assembly.

In the folded electrode assembly, an active material on the electrode plate is at risk of falling off at a corner formed in folding the electrode plate. In the stacked electrode assembly, the electrode plate feedstock needs to be cut into discrete electrode plates first, and the cutting process increases the risk of exposing metal burrs and the risk of dropping off the active material from the electrode plate due to the cutting.

### SUMMARY

In view of the above problem, this application provides an electrode plate, an electrode assembly, a battery cell, a battery, and an electrical device to alleviate the problem that an active material falls off the electrode plate.

According to a first aspect, this application provides an electrode plate. The electrode plate includes:
a current collector, where the current collector includes a base film layer and metal layers, and the metal layers are disposed on the base film layer in a spaced-apart manner; and
active material layers, where the active material layers are applied to the base film layer in a spaced-apart manner, and each active material layer at least partially covers a corresponding metal layer.

The metal layers are spaced apart from each other, and the active material layers are spaced apart from each other. Therefore, a clearance exists between a metal layer and an adjacent metal layer, and between an active material layer and an adjacent active material layer, so that the base film layer includes a part that is overlaid with neither the metal layer nor the active material layer. Due to the part overlaid with neither the metal layer nor the active material layer, the active material layer is free from the risk of falling off even if the electrode plate is bent or cut, thereby overcoming the defects in the prior art.

In some embodiments of the electrode plate, the base film layer is non-conductive. The non-conductivity of the base film layer prevents a conductive part of the electrode plate from being exposed during cutting or bending of the electrode plate, thereby reducing the risk of a short circuit.

In some embodiments of the electrode plate, the metal layer is disposed on one side or both sides of the base film layer.

In some embodiments of the electrode plate, each active material layer completely covers a corresponding metal layer, thereby reducing the possibility of inadvertently cutting into the metal layer during the cutting, and avoiding occurrence of metal burrs and the possibility of exposing a metal surface.

In some embodiments of the electrode plate, a part, overlaid with neither the metal layer nor the active material layer, of the base film layer, forms a cut-off portion or a corner portion; and a part, overlaid with both the metal layer and the active material layer, of the base film layer, forms a straight portion.

In some embodiments of the electrode plate, lengths of the metal layers are equal to each other, and lengths of the active material layers are equal to each other.

In some embodiments of the electrode plate, the metal layers are affixed to the base film layer by vacuum evaporation, bonding, or mechanical joining.

In some embodiments of the electrode plate, a thickness of each of the metal layers ranges from 0.01 µm to 3 µm.

According to a second aspect, this application provides an electrode assembly. The electrode assembly includes a positive electrode plate, a negative electrode plate, and a separator disposed between the positive electrode plate and the negative electrode plate. The positive electrode plate is formed by the electrode plate disclosed above, and/or, the negative electrode plate is formed by the electrode plate disclosed above.

Similarly, the metal layers are spaced apart from each other, and the active material layers are spaced apart from each other. Therefore, a clearance exists between a metal layer and an adjacent metal layer, and between an active material layer and an adjacent active material layer, so that the base film layer includes a part that is overlaid with neither the metal layer nor the active material layer. Due to the part overlaid with neither the metal layer nor the active material layer, the active material layer is free from the risk of falling off even if the electrode plate is bent or cut, thereby overcoming the defects in the prior art.

In addition, the part configured to form a corner portion is overlaid with neither the metal layer nor the active material layer. Therefore, the electrode plate is free from the risk of lithium plating even if this part of the electrode plate is broken. In addition, the part configured to form a straight portion and the part configured to form a corner portion on the electrode plate are conspicuous and definite. Therefore, the probability of misalignment is reduced during folding and assembling, thereby improving the assembling efficiency, and further improving the safety performance of the stacked-type battery.

In addition, a clearance exists between the metal layer and an adjacent metal layer, and between an active material layer and an adjacent active material layer. Therefore, the cutting can be aimed at the clearance directly in a process of forming discrete electrode plates by cutting the part overlaid with neither the metal layer nor the active material layer on the electrode plate. The cutting position is not strictly fixed, but allows for a margin. In other words, the cutting can be carried out within the range of the clearance, thereby improving the flexibility of cutting, improving the efficiency of cutting, and in turn, improving the production efficiency.

In some embodiments of the electrode assembly, the positive electrode plate is configured to form discrete positive electrode plates by cutting a part, overlaid with neither the metal layer nor the active material layer, of the base film layer; and the negative electrode plate is configured to form discrete negative electrode plates by cutting the part, overlaid with neither the metal layer nor the active material layer, of the base film layer. The positive electrode plates and the negative electrode plates are stacked alternately.

In some embodiments of the electrode assembly, a length of the discrete positive electrode plate is less than a length of the discrete negative electrode plate.

In some embodiments of the electrode assembly, a length of the active material layer of the discrete positive electrode plate is less than a length of the active material layer of the discrete negative electrode plate.

This dimensional relationship between the positive electrode plate and the negative electrode plate provides a sufficient space for intercalating, into the negative electrode, the lithium ions deintercalated from the edge of the positive electrode, thereby reducing the risk of lithium plating.

In some embodiments of the electrode assembly, the base film layer of the discrete positive electrode plate is cut in such a way that a length of the base film layer is approximately equal to a length of the active material layer, and the base film layer of the discrete negative electrode plate is cut in such a way that the length of the base film layer is approximately equal to the length of the active material layer.

In some embodiments of the electrode assembly, the electrode assembly is configured to: fold a part, overlaid with neither the metal layer nor the active material layer, of the base film layer of the positive electrode plate, fold a part, overlaid with neither the metal layer nor the active material layer, of the base film layer of the negative electrode plate, so that a part, overlaid with both the metal layer and the active material layer, of the positive electrode plate and a part, overlaid with both the metal layer and the active material layer, of the negative electrode plate are stacked alternately.

In some embodiments of the electrode assembly, a length of a part, overlaid with both the metal layer and the active material layer, of the positive electrode plate is less than a length of a part, overlaid with both the metal layer and the active material layer, of the negative electrode plate. This dimensional relationship between the positive electrode plate and the negative electrode plate makes it convenient for the lithium ions deintercalated from the positive electrode to migrate to the negative electrode, thereby reducing the risk of lithium plating.

According to a third aspect, this application provides a battery cell. The battery cell includes a housing and the electrode assembly disclosed above. The electrode assembly is disposed in the housing.

According to a fourth aspect, this application provides a battery, including the battery cell disclosed in the foregoing embodiment.

According to a fifth aspect, this application provides an electrical device. The electrical device includes the battery cell disclosed in the foregoing embodiment, and/or, a battery configured to provide electrical energy for the electrical device.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:
FIG. 1 is a schematic diagram of an electrode plate according to some embodiments of this application;
FIG. 2 is a schematic diagram of a positive electrode plate according to some embodiments of this application;
FIG. 3 is a schematic diagram of a negative electrode plate according to some embodiments of this application;
FIG. 4 is a schematic diagram of an electrode assembly according to some embodiments of this application;
FIG. 5 is a schematic diagram of an electrode assembly according to some embodiments of this application;
FIG. 6 is a schematic diagram of an electrode assembly according to some embodiments of this application;
FIG. 7 is a schematic diagram of an electrode assembly according to some embodiments of this application; and
FIG. 8 is a schematic diagram of an electrode assembly according to some embodiments of this application.

List of reference numerals:
electrode plate 1; current collector 20; active material layer 30; base film layer 22; metal layer 24; clearance 222; part 224;
positive electrode plate 11; positive current collector 120; positive active material layer 130; positive base film layer 122; positive metal layer 124;
negative electrode plate 31; negative current collector 320; negative active material layer 330; negative base film layer 322; negative metal layer 324;
electrode assembly 5; separator 52.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the increase of the application fields of the power batteries.

A battery typically includes a housing and an electrode assembly. The electrode assembly is accommodated in the housing. The electrode assembly is typically formed by stacking or folding or winding continuous electrode plates. The electrode plates include a positive electrode plate and a negative electrode plate. A continuous electrode plate typically includes a current collector and an active material layer continuously applied onto the current collector. The active material layer may be applied on one side or both sides of the current collector.

Electrode assemblies of batteries typically include a folded electrode assembly, a stacked electrode assembly, and a jelly-roll electrode assembly. In a folded electrode assembly, a positive electrode plate, a negative electrode plate, and a separator located between the positive electrode plate and the negative electrode plate are folded together to form the electrode assembly. After the positive electrode plate or negative electrode plate is folded, a plurality of layers of straight portions and corner portions are formed. Adjacent straight portions are connected to each other by a corner portion.

In a folded or j elly-roll electrode assembly, when the electrode plate is folded or wound, a corner portion is formed as a result of bending the current collector and the active material layer. The bending results in a risk of detachment of the active material layer from the current collector, which is also referred to as powder shedding, thereby posing a short-circuit hazard of the battery.

In addition, the electrode plate may break at the corner when bending. In a case that the negative electrode plate breaks at the corner, a region at the corner portion of the corresponding positive electrode plate is lacking, thereby posing a risk of lithium plating. In the case that the positive electrode plate breaks at the corner, burrs are formed at the corner portion, and may pierce the separator between the negative electrode plate and the positive electrode plate.

In a stacked electrode assembly, an electrode plate feedstock is cut into a discrete electrode plate. A discrete positive electrode plate, a discrete negative electrode plate, and a separator located between the positive electrode plate and the negative electrode plate are stacked alternately to form the electrode assembly.

In the stacked electrode assembly, the electrode plate feedstock needs to be cut into discrete electrode plates first, In the cutting process, each discrete electrode plate includes four trimmed edges, thereby increasing the risk of exposing metal burrs and the risk of shedding the active material layer from the electrode plate due to the cutting.

The electrode assembly disclosed in an embodiment of this application is applicable to, but not limited to use in, electrical devices such as a vehicle, watercraft, or aircraft. A power supply system of the electrical device may be formed by using the electrode plate, the electrode assembly, the battery, or the like disclosed in this application, so as to reduce the risk of shedding the active material from the electrode plate of the electrode assembly of the battery.

The battery of this application may be used as a power supply of the electrical device. The electrical device may be, but is not limited to, a mobile phone, a tablet, a laptop computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

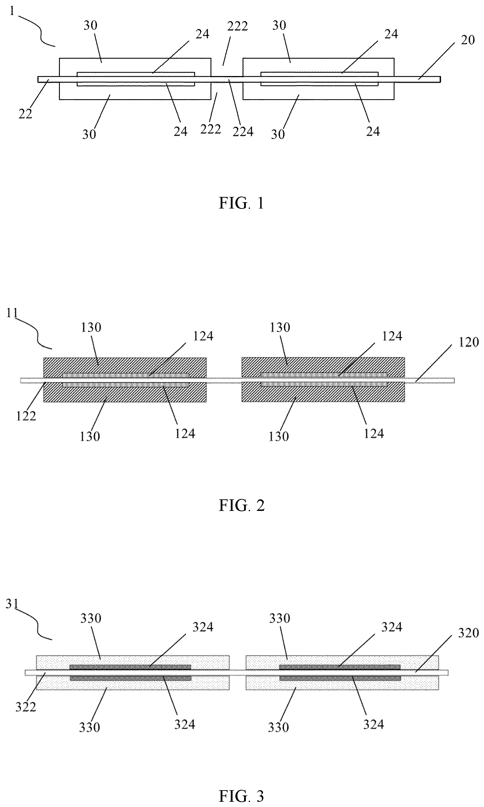

According to some embodiments of this application, referring to FIG. 1 together with FIG. 2 to FIG. 3, FIG. 1 is a schematic structural diagram of an electrode plate according to some embodiments of this application; and FIG. 2 to FIG. 3 are cross-sectional schematic views of a positive electrode plate and a negative electrode plate according to some embodiments of this application.

As shown in FIG. 1, this application provides an electrode plate 1. The electrode plate includes a current collector 20 and an active material layer 30. According to some embodiments of this application, the current collector 20 may be a composite current collector including a base film layer 22 and a metal layer 24. The metal layers 24 are disposed on the base film layer 22 in a spaced-apart manner. The active material layers 30 are applied to the base film layer 22 in a spaced-apart manner. Each active material layer 30 at least partially covers a corresponding metal layer 24.

The base film layer 22 may be a continuous base film layer, and the metal layers 24 may be a plurality of metal layers distributed on the base film layer 22. The metal layers 24 are spaced apart from each other. The active material layer 30 may be a plurality of active material layers distributed on the base film layer 22. The active material layers 30 are spaced apart from each other. Generally, the number of active material layers 30 is identical to the number of metal layers 24, so that each active material layer 30 can cover a corresponding metal layer 24, and each metal layer 24 is covered by an active material layer 30.

FIG. 1 shows a part of an electrode plate according to some embodiments of this application. For ease of explanation and understanding, the drawing shows a base film layer 22, four metal layers 24, and four corresponding active material layers 30 of the electrode plate 1. A person skilled in the art understands that the above structures and numbers are merely illustrative rather than restrictive, and the number of metal layers 24 and the number of active material layers 30 may be more or less than four.

The metal layers 24 are spaced apart from each other, and the active material layers 30 are spaced apart from each other. Therefore, a clearance 222 exists between a metal layer 24 and an adjacent metal layer 24, and between an active material layer 30 and an adjacent active material layer 30, so that the base film layer 22 includes a part 224 that is overlaid with neither the metal layer 24 nor the active material layer 30, as shown in FIG. 1. The electrode plate 1 constructed according to this application can avoid the above defects in the prior art.

When the electrode plate 1 is configured to form a folded or jelly-roll electrode assembly, the electrode plate 1 is folded. A part, overlaid with both the metal layer 24 and the active material layer 30, of the electrode plate 1 may be configured to form a straight portion. A part 224, overlaid with neither the metal layer 24 nor the active material layer 30, of the electrode plate 1 may be configured to form a corner portion. Due to the part 224 overlaid with neither the metal layer 24 nor the active material layer 30, the corner metal layer is free from the risk of being exposed, and the active material layer is free from the risk of falling off even if the electrode plate is bent, thereby overcoming the defects in the prior art.

On the other hand, the part 224 configured to form a corner portion is overlaid with neither the metal layer 24 nor the active material layer 30. Therefore, the electrode plate is free from the risk of short circuits and/or lithium plating even if this part 224 of the electrode plate is broken. In addition, the part configured to form a straight portion and the part configured to form a corner portion on the electrode plate 1 are conspicuous and definite. Therefore, the probability of misalignment is reduced during folding and assembling, thereby improving the assembling efficiency, and further improving the safety performance of the stacked-type battery.

When the electrode plate 1 is configured to form a stacked electrode assembly, the electrode plate 1 is cut into a discrete electrode plate. A part 224, overlaid with neither the metal layer 24 nor the active material layer 30, of the electrode plate 1 may be configured to be cut, and it is ensured not to cut a part, overlaid with both the metal layer 24 and the active material layer 30, of the electrode plate 1. Due to the part 224 overlaid with neither the metal layer 24 nor the active material layer 30, cutting the part 224 will not cause the active material layer 30 to fall off, and will not cause the metal layer to form burrs, thereby overcoming the defects in the prior art.

On the other hand, a clearance 222 exists between the metal layer 24 and an adjacent metal layer 24, and between an active material layer 30 and an adjacent active material layer 30. Therefore, the cutting can be aimed at the clearance 222 directly in a process of forming discrete electrode plates by cutting the part 224 overlaid with neither the metal layer 24 nor the active material layer 30 on the electrode plate 1. The cutting position is not strictly fixed, but allows for a margin. In other words, the cutting can be carried out within the range of the clearance 222, thereby improving the flexibility of cutting, improving the efficiency of cutting, and in turn, improving the production efficiency.

According to some embodiments of this application, optionally, the base film layer 22 of the current collector 20 may be a non-conductive base film layer. The base film layer 22 may be made of a non-conductive material, for example, may be a polymer layer made of a material selected from a group including polypropylene, polyamide, epoxy resin or the like, or a combination thereof.

The non-conductivity of the base film layer 22 prevents a conductive part of the electrode plate 1 from being exposed during cutting or bending of the electrode plate. For example, when the part 224, overlaid with neither the metal layer 24 nor the active material layer 30, of the electrode plate 1 is configured to form a corner portion, because the part 224 of the base film layer 22 is non-conductive, the conductive part (for example, the metal layer) is prevented from being exposed even if the electrode plate is broken, thereby reducing the risk of a short circuit. Similarly, when the part 224, overlaid with neither the metal layer 24 nor the active material layer 30, of the electrode plate 1 is being cut, because the part 224 of the base film layer 22 is non-conductive, the conductive part (for example, the metal layer) is prevented from being exposed even if the electrode plate is cut, thereby reducing the risk of a short circuit.

According to some embodiments of this application, optionally, the metal layer 24 may be disposed on one side or both sides of the base film layer 22. FIG. 1 shows an example in which the metal layer 24 is disposed on both sides of the base film layer 22 to form a double-sided electrode plate. However, a person skilled in the art understands that the metal layer 24 may be disposed on just one side of the base film layer 22 to form a single-sided electrode plate.

Correspondingly, the active material layer 30 may be disposed on one side or both sides of the base film layer 22 to cover the corresponding metal layer 24. FIG. 1 shows an example in which the active material layers 30 are disposed on both sides of the base film layer 22 to cover the metal layers 24 on the two sides of the base film layer 22 respectively, as shown in FIG. 1.

According to some embodiments of this application, optionally, each active material layer 30 may completely cover the corresponding metal layer 24 on the base film layer 22 of the electrode plate 1. FIG. 1 shows an example in which the active material layer 30 completely covers the metal layer 24. On the one hand, the active material layer 30 completely covers the metal layer 24 so that the metal layer 24 is not exposed to the external environment, thereby reducing the risk of lithium plating. On the other hand, the active material layer 30 completely covering the metal layer 24 reduces the possibility of inadvertently cutting into the metal layer during the cutting, and avoids occurrence of metal burrs.

According to some embodiments of this application, when the electrode plate 1 is configured to form a folded electrode assembly, a part, overlaid with both the metal layer 24 and the active material layer 30, of the electrode plate 1 may be configured to form a straight portion. Apart 224, overlaid with neither the metal layer 24 nor the active material layer 30, of the electrode plate 1 may be configured to form a corner portion. When the electrode plate 1 is configured to form a stacked electrode assembly, a part 224, overlaid with neither the metal layer 24 nor the active material layer 30, of the electrode plate 1 may be configured to form a cut-off portion, at which the electrode plate can be cut conveniently to form discrete electrode plates. After completion of the cutting, the part overlaid with both the metal layer 24 and the active material layer 30 may form a straight portion.

According to some embodiments of this application, optionally, for the plurality of metal layers 24 on the base film layer 22, the lengths of the metal layers 24 may be equal. The "length" here may be a dimension measured, for example, along a left-right direction on the page of FIG. 1. Correspondingly, the active material layers 30 covering the metal layers 24 respectively may be of equal lengths. In this way, the discrete electrode plates cut out from the same electrode plate 1 are of approximately identical dimensions, or the straight portions formed after folding of the electrode plate 1 are of approximately identical dimensions.

According to some embodiments of this application, optionally, the metal layer 24 may be affixed to the base film layer 22 in diverse ways. For example, the metal layers 24 are affixed to the base film layer 22 by vacuum evaporation, bonding, or mechanical joining. A person skilled in the art understands that the metal layer 24 may be affixed to the base film layer 22 in any appropriate manner known in the art different from the manners enumerated above to form the composite current collector 20.

According to some embodiments of this application, optionally, the thickness of the metal layer 24 may be selected as required in practical applications. For example, the thickness may be 0.01 µm to 3 µm. A person skilled in the art understands that the thickness of the metal layer 24 may fall within another appropriate range instead.

According to some embodiments of this application, optionally, the metal layer 24 may be made of any appropriate metal material, for example, made of aluminum or copper, so as to form an aluminum foil layer or a copper foil layer.

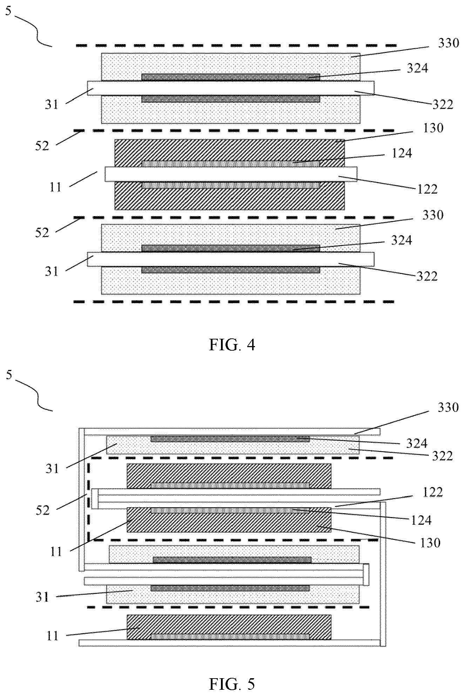

According to some embodiments of this application, referring to FIG. 4 to FIG. 8 together with FIG. 2 to FIG. 3, FIG. 4 to FIG. 8 are cross-sectional schematic views of an electrode assembly according to some embodiments of this application; and FIG. 2 to FIG. 3 are cross-sectional schematic views of a positive electrode plate and a negative electrode plate of the electrode assembly according to some embodiments of this application.

FIG. 4 to FIG. 8 show several examples of an electrode assembly. An electrode assembly 5 provided in this application includes a positive electrode plate 11, a negative electrode plate 31, and a separator 52 disposed between the positive electrode plate 11 and the negative electrode plate 31. The positive electrode plate 11 may be formed by the above electrode plate 1, and the negative electrode plate 31 may also be formed by the above electrode plate 1.

FIG. 2 shows an example of a positive electrode plate 11. The positive electrode plate 11 includes a positive current collector 120 and a positive active material layer 130 applied on the positive current collector 120. The positive current collector 120 includes a positive base film layer 122 and a positive metal layer 124 disposed on the positive base film layer 122. As mentioned above, the positive metal layers 124 may be disposed on the positive base film layer 122 in a spaced-apart manner. The positive active material layers 130 may also be disposed on the positive base film layer 122 in a spaced-apart manner and cover the corresponding positive metal layers 124.

The positive electrode plate 11 shown in FIG. 2 is a double-sided electrode plate, that is, both sides of the positive base film layer 122 are overlaid with the positive metal layer 124 and the corresponding positive active material layer 130. Alternatively, the positive electrode plate 11 may be in the form of a single-sided electrode plate. That is, only one side of the positive base film layer 122 is overlaid with the positive metal layer 124 and the corresponding positive active material layer 130, as shown in FIG. 5.

The positive electrode plate 11 shown in FIG. 2 is continuous. In this case, the positive base film layer 122 is overlaid with a plurality of spaced-apart positive metal layers 124 and a plurality of corresponding positive active material layers 130. Alternatively, the positive electrode plate 11 may be a discrete positive electrode plate. In this case, one side of the positive base film layer 122 is overlaid with one positive metal layer 124 and a corresponding positive active material layer 130, or both sides of the positive base film layer 122 are overlaid with one positive metal layer 124 and a corresponding positive active material layer 130, as shown in FIG. 4.

The lengths of the positive metal layers 124 on the positive electrode plate 11 may be equal to each other, and the lengths of the corresponding positive active material layers 130 may also be equal to each other.

FIG. 3 shows an example of a negative electrode plate 31. The negative electrode plate 31 includes a negative current collector 320 and a negative active material layer 330 applied on the negative current collector 320. The negative current collector 320 includes a negative base film layer 322 and a negative metal layer 324 disposed on the negative base film layer 322. As mentioned above, the negative metal layers 324 may be disposed on the negative base film layer 322 in a spaced-apart manner. The negative active material layers 330 may also be disposed on the negative base film layer 322 in a spaced-apart manner and cover the corresponding negative metal layers 324.

The negative electrode plate 31 shown in FIG. 3 is a double-sided electrode plate, that is, both sides of the negative base film layer 322 are overlaid with the negative metal layer 324 and the corresponding negative active material layer 330. Alternatively, the negative electrode plate 31 may be in the form of a single-sided electrode plate. That is, only one side of the negative base film layer 322 is overlaid with the negative metal layer 324 and the corresponding negative active material layer 330, as shown in FIG. 5.

The negative electrode plate 31 shown in FIG. 3 is continuous. In this case, the negative base film layer 322 is overlaid with a plurality of spaced-apart negative metal layers 324 and a plurality of corresponding negative active material layers 330. Alternatively, the negative electrode plate 31 may be a discrete negative electrode plate. In this case, one side of the negative base film layer 322 is overlaid with one negative metal layer 324 and a corresponding negative active material layer 330, or both sides of the negative base film layer 322 are overlaid with one negative metal layer 324 and a corresponding negative active material layer 330, as shown in FIG. 4.

The lengths of the negative metal layers 324 on the negative electrode plate 31 may be equal to each other, and the lengths of the corresponding negative active material layers 330 may also be equal to each other.

In an embodiment, the positive metal layer 124 on the positive electrode plate 11 may be an aluminum foil layer with a thickness ranging from 0.01 µm to 3 µm. The negative metal layer 324 on the negative electrode plate 31 may be a copper foil layer with a thickness ranging from 0.01 µm to 3 µm.

According to some embodiments of this application, optionally, referring to FIG. 4, FIG. 4 shows an electrode assembly 5 according to an embodiment of this application, where the electrode assembly 5 is a stacked electrode assembly.

The positive electrode plate 11 may be configured to form discrete positive electrode plates by cutting a part, overlaid with neither the positive metal layer nor the positive active material layer, of the positive base film layer 122. In the example shown in FIG. 4, the positive electrode plate 11 is in the form of a double-sided electrode plate, and forms discrete positive electrode plates. On each discrete positive electrode plate, each of the two sides of the positive base film layer 122 is overlaid with a positive metal layer 124 and a positive active material layer 130.

Similarly, the negative electrode plate 31 is configured to form discrete negative electrode plates by cutting a part, overlaid with neither the negative metal layer nor the negative active material layer, of the negative base film layer 322. In the example shown in FIG. 4, the negative electrode plate 31 is in the form of a double-sided electrode plate, and forms discrete negative electrode plates. On each discrete negative electrode plate, each of the two sides of the negative base film layer 322 is overlaid with a negative metal layer 324 and a negative active material layer 330.

The positive electrode plates 11 in the discrete form and the negative electrode plates 31 in the discrete form are stacked alternately, and a separator 52 is disposed between a positive electrode plate 11 and a negative electrode plate 31 to form an electrode assembly 5. As shown in FIG. 4, the positive electrode plate 11 is disposed in the middle of the electrode assembly 5. Two negative electrode plates 31 are disposed on the two sides of the positive electrode plate 11 respectively so that the positive electrode plate 11 is sandwiched in the middle.

In the example shown in FIG. 4, both the positive electrode plate 11 and the negative electrode plate 31 are in the form of a double-sided electrode plate. However, a person skilled in the art understands that this is merely an example. The positive electrode plate 11 may be in the form of a single-sided electrode plate instead, and the negative electrode plate 31 may be in the form of a single-sided electrode plate instead. For example, the positive electrode plate 11 is a single-sided electrode plate, and the negative electrode plate 31 is a double-sided electrode plate; or, the positive electrode plate 11 is a double-sided electrode plate, and the negative electrode plate 31 is a single-sided electrode plate; or, both the positive electrode plate 11 and the negative electrode plate 31 are single-sided electrode plates.

According to some embodiments of this application, the length of the positive electrode plate 11 in the discrete form may be less than or equal to the length of the negative electrode plate 31 in the discrete form, or the length of the positive active material layer 130 on the positive electrode plate 11 may be less than or equal to the length of the negative active material layer 330 on the negative electrode plate 31. The "length" here may be a dimension measured, for example, along a left-right direction on the page of FIG. 4. This dimensional relationship between the positive electrode plate 11 and the negative electrode plate 31 makes it convenient for the lithium ions deintercalated from the positive electrode to migrate to the negative electrode, thereby reducing the risk of lithium plating.

According to some embodiments of this application, optionally, the positive base film layer 122 of the positive electrode plate 11 in the discrete form may be cut in such a way that the length of the positive base film layer 122 is approximately equal to the length of the positive active material layer 130. Similarly, the negative base film layer 322 of the negative electrode plate 31 in the discrete form may be cut in such a way that the length of the negative base film layer 322 is approximately equal to the length of the negative active material layer 330. Such a structure is favorable to reducing the space occupied by other components than the electrode plate, and improving the energy density of the electrode assembly. In the example shown in FIG. 4, the length of the positive base film layer 122 is slightly greater than the length of the positive active material layer 130, and the length of the negative base film layer 322 is slightly greater than the length of the negative active material layer 330 in order to reduce the possibility of cutting into the active material layer during cutting of the electrode plate.

According to some embodiments of this application, optionally, referring to FIG. 5 to FIG. 8, FIG. 5 to FIG. 8 show an electrode assembly 5 according to some embodiments of this application, where the electrode assembly 5 is a folded electrode assembly.

The part, overlaid with neither the positive metal layer nor the positive active material layer, of the positive base film layer 122 of the positive electrode plate 11, is folded; and the part, overlaid with neither the negative metal layer nor the negative active material layer, of the negative base film layer 322 of the negative electrode plate 31, is folded. In this way, the part, overlaid with both the positive metal layer 124 and the positive active material layer 130, of the positive electrode plate 11 and the part, overlaid with both the negative metal layer 324 and the negative active material layer 330, of the negative electrode plate 31 are stacked alternately. At the same time, a separator 52 is disposed between the positive electrode plate 11 and the negative electrode plate 31, thereby forming an electrode assembly 5.

FIG. 5 shows an electrode assembly 5 according to an embodiment of this application, where the positive electrode plates 11 of the electrode assembly 5 are all in the form of single-sided positive electrode plates, and the negative electrode plates 31 are all in the form of single-sided negative electrode plates.

As shown in FIG. 5, the positive electrode plate 11 includes three spaced-apart positive metal layers 124 and three corresponding positive active material layers 130 spaced apart. Correspondingly, the negative electrode plate 31 includes three spaced-apart negative metal layers 324 and three corresponding negative active material layers 330 spaced apart. The positive electrode plate 11 and the negative electrode plate 31 are placed in parallel, so that the positive metal layer 124 and the positive active material layer 130 face the negative metal layer 324 and the negative active material layer 330. A separator 52 is inserted between the positive electrode plate 11 and the negative electrode plate 31, and then the positive electrode plate 11, the negative electrode plate 31, and the separator 52 are folded together twice at the two corner portions to obtain the structure shown in FIG. 5.

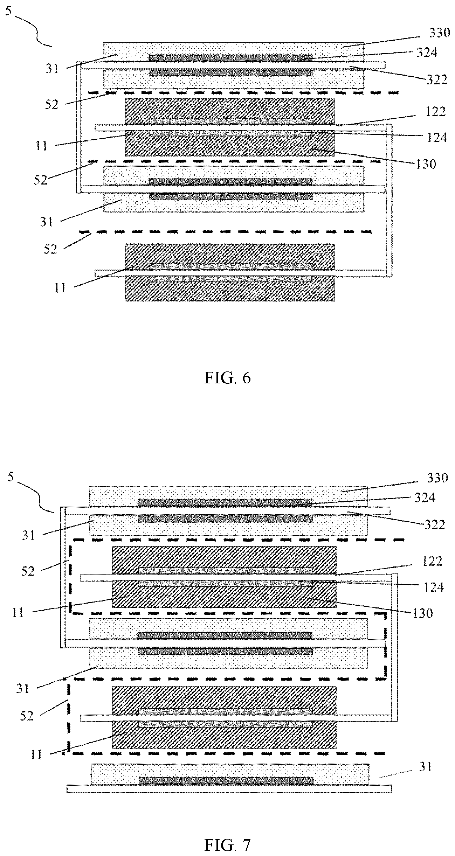

FIG. 6 shows an electrode assembly 5 according to an embodiment of this application, where the positive electrode plates 11 of the electrode assembly 5 are all in the form of double-sided positive electrode plates, and the negative electrode plates 31 are all in the form of double-sided negative electrode plates.

As shown in FIG. 6, the positive electrode plate 11 and the negative electrode plate 31 are folded at their respective corner portions, and then both stacked in such a way that the straight portions of the positive electrode plate 11 and the straight portions of the negative electrode plate 31 are stacked alternately. The separator 52 is interposed between the positive electrode plate 11 and the negative electrode plate 31.

FIG. 7 shows an electrode assembly 5 according to an embodiment of this application, where the electrode assembly 5 is prepared on the basis of the electrode assembly shown in FIG. 6 but differs in that a single-sided discrete negative electrode plate 31 is added below the straight portion of the lower positive electrode plate 11. The added single-sided discrete negative electrode plate 31 facilitates further efficient utilization of the lower positive electrode plate 11, avoids waste of the positive electrode plate, and increases the energy density.

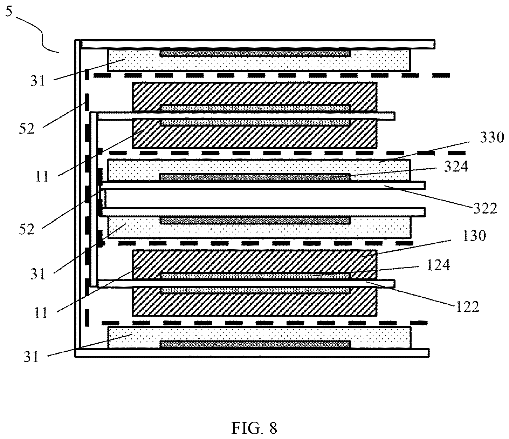

FIG. 8 shows an electrode assembly 5 according to an embodiment of this application, where the electrode assembly 5 is designed in a combined form. To be specific, the positive electrode 11 is in the form of a double-sided electrode plate, and the negative electrode plate 31 is in the form of a single-sided electrode plate.

As shown in FIG. 8, the electrode assembly 5 includes one positive electrode plate 11 and two negative electrode plates 31. One of the two negative electrode plates 31 is folded at the corner portion. The positive electrode plate 11 is folded at the corner portion and interposed between the folded negative electrode plates 31. The other of the two negative electrode plates 31 is folded at the corner portion and interposed between the folded positive electrode plates 11. The separator 52 is interposed between the positive electrode plate 11 and the negative electrode plate 31.

In the example shown in FIG. 5 to FIG. 8, the length of the part, overlaid with both the positive metal layer 124 and the positive active material layer 130, of the positive electrode plate 11 may be less than or equal to the length of the part, overlaid with both the negative metal layer 324 and the negative active material layer 330, of the negative electrode plate 31. The "length" here may be a dimension measured, for example, along a left-right direction on the page of FIG. 5 to FIG. 8. This dimensional relationship between the positive electrode plate 11 and the negative electrode plate 31 makes it convenient for the lithium ions deintercalated from the positive electrode to migrate to the negative electrode, thereby reducing the risk of lithium plating.

According to some embodiments of this application, a battery is further provided. The battery includes a housing and the electrode assembly disclosed above. The electrode assembly is disposed in the housing.

To illustrate the technical advantages of the technical solutions hereof over the prior art, some embodiments of this application are compared with the comparative embodiments in the prior art below.

The first embodiment of this application for comparison employs the electrode assembly shown in FIG. 4. The second embodiment employs the electrode assembly shown in FIG. 5. The third embodiment employs the electrode assembly shown in FIG. 7.

The first comparative embodiment in the prior art for comparison is a stacked electrode assembly in which the current collector contains no base film layer. In the first comparative embodiment, the positive electrode plate and the negative electrode plate are continuously coated, that is, the active material layer is continuously applied on the current collector; and a cutting region is located on the active material layer, and the electrode assembly is assembled in the manner shown in FIG. 4 after the electrode plate is cut into discrete electrode plates.

The second comparative embodiment in the prior art for comparison is a folded electrode assembly in which the current collector includes a base film layer and a metal layer continuously disposed thereon. In the second comparative embodiment, the active material layer is intermittently applied and located only in the straight portion, and then the electrode assembly is assembled in a continuous manner as shown in FIG. 5, and a base film layer coated with no active material layer but overlaid with a metal layer is disposed at the corner portion.

In the stacked electrode assemblies in the first embodiment and the first comparative embodiment, in order to facilitate comparison and obtain conspicuous comparison results, the length of each layer of positive electrode plate exceeds the negative electrode plate by 2 mm, and the bottom of the separator is flush with the bottom of the positive electrode plate. Because the positive electrode plate exceeds the negative electrode plate, no vacancies are available at the negative electrode for intercalating the lithium ions deintercalated from the excess part of the positive electrode. Lithium dendrites resulting from lithium plating climb over the separator and lap the edge aluminum of the cut surface to cause a short circuit. After the battery is assembled, a charge-discharge cycle test is carried out, and the probability of fire and failure of the battery is recorded as follows:

| Group | Fire and failure probability |
|---|---|
| First Embodiment | 3% |
| First comparative embodiment | 95% |

The stacked electrode assemblies prepared in the first embodiment and the first comparative embodiment are designed as defective specimens in which the positive electrode plate exceeds the negative electrode plate. Consequently, no vacancies are available at the negative electrode plate for intercalating the lithium ions deintercalated from the excess part of the positive electrode plate. After lithium plating occurs at the edge of the negative electrode plate, the lithium dendrites continue growing cumulatively with the increase of the number of charge-discharge cycles, and ultimately climb over the separator. In the first comparative embodiment, after the lithium plating, the lithium dendrites climb toward the positive electrode along the separator, and are prone to lap the edge aluminum of the cut surface and lead to a short circuit, resulting in a fire and failure probability as high as 95%. In the first embodiment, because there is still a polymer base film layer on the edge after the cutting, the lithium dendrites will not lap the edge aluminum to cause a short circuit even if the lithium dendrites climb to the positive electrode, thereby greatly reducing the risk of drastic short circuits, and reducing the fire and failure probability of the battery cell to approximately 3%.

In the folded electrode assemblies in the second embodiment, the third embodiment, and the second comparative embodiment, in order to facilitate comparison and obtain conspicuous comparison results, the width of the positive electrode plate is equal to the width of the negative electrode plate. The assembled batteries are subjected to a high-current charge-discharge cycle test, and the fire and failure probability of the batteries is recorded below.

| Group | Fire and failure probability |
|---|---|
| Second Embodiment | 3% |
| Third Embodiment | 3% |
| Second comparative embodiment | 98% |

In the folded electrode assemblies prepared in the second embodiment, the third embodiment, and the second comparative embodiment above, the edge of the positive electrode plate is aligned with the edge of the negative electrode plate. When the batteries are charged at a high current, the lithium ions are rapidly deintercalated from the edge of the positive electrode plate and intercalated into the negative electrode. In a discharge process, the lithium ions that do not migrate back in time keep accumulating at the edge of the negative electrode plate, and result in lithium plating. The lithium dendrites pierce the separator. In the second and third embodiments, the folded corners are polymer base film layers overlaid with no metal layer, and the lithium dendrites do not lap onto the metallic current collector of the positive electrode plate even if piercing the separator. The consequence of piercing the separator is just a short circuit with the active material layer of the positive electrode plate. Therefore, the fire and failure probability is as low as approximately 3%. The risk of failure caused by a short circuit between aluminum and the negative electrode plate and lithium dendrites is the highest. Therefore, when there is still aluminum foil exposed on the corner surface, as in the case of the second comparative embodiment, the fire and failure probability is caused to be as high as 98%.

As can be seen from the above comparison, the electrode assembly according to this application employs metal layers and active material layers applied intermittently on the base film layer, thereby avoiding the risk of severe short-circuit failure, avoiding shedding of the active material layer during cutting, and further improving the safety performance of the electrode assembly and the battery.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. An electrode plate (1), comprising:
a current collector (20), wherein the current collector (20) comprises a base film layer (22) and metal layers (24), and the metal layers (24) are disposed on the base film layer (22) in a spaced-apart manner; and
active material layers (30), wherein the active material layers (30) are applied to the base film layer (22) in a spaced-apart manner, and each active material layer (30) at least partially covers a corresponding metal layer (24).

2. The electrode plate (1) according to claim 1, wherein the base film layer (22) is non-conductive.

3. The electrode plate (1) according to claim 1 or 2, wherein the metal layer (24) is disposed on one side or both sides of the base film layer (22).

4. The electrode plate (1) according to any one of claims 1 to 3, wherein each active material layer (30) completely covers a corresponding metal layer (24).

5. The electrode plate (1) according to any one of claims 1 to 4, wherein a part, overlaid with neither the metal layer (24) nor the active material layer (30), of the base film layer (22), forms a cut-off portion or a corner portion; and a part, overlaid with both the metal layer (24) and the active material layer (30), of the base film layer (22), forms a straight portion.

6. The electrode plate (1) according to any one of claims 1 to 5, wherein lengths of the metal layers (24) are equal to each other, and lengths of the active material layers (30) are equal to each other.

7. The electrode plate (1) according to any one of claims 1 to 6, wherein the metal layers (24) are affixed to the base film layer (22) by vacuum evaporation, bonding, or mechanical joining.

8. The electrode plate (1) according to any one of claims 1 to 7, wherein a thickness of each of the metal layers (24) ranges from 0.01 µm to 3 µm .

9. An electrode assembly (5), comprising a positive electrode plate (11), a negative electrode plate (31), and a separator (52) disposed between the positive electrode plate (11) and the negative electrode plate (31), wherein the positive electrode plate (11) is formed by the electrode plate (1) according to any one of claims 1 to 8, and/or, the negative electrode plate (31) is formed by the electrode plate (1) according to any one of claims 1 to 8.

10. The electrode assembly (5) according to claim 9, wherein the positive electrode plate (11) is configured to form a discrete positive electrode plate by cutting a part, overlaid with neither the metal layer (24) nor the active material layer (30), of the base film layer (22); the negative electrode plate (31) is configured to form a discrete negative electrode plate by cutting the part, overlaid with neither the metal layer (24) nor the active material layer (30), of the base film layer (22); and the positive electrode plate (11) and the negative electrode plate (31) are stacked alternately.

11. The electrode assembly (5) according to claim 10, wherein a length of the discrete positive electrode plate is less than a length of the discrete negative electrode plate.

12. The electrode assembly (5) according to claim 10 or 11, wherein a length of the active material layer (30) of the discrete positive electrode plate is less than a length of the active material layer (30) of the discrete negative electrode plate.

13. The electrode assembly (5) according to any one of claims 10 to 12, wherein the base film layer (22) of the discrete positive electrode plate is cut in such a way that a length of the base film layer (22) is equal to a length of the active material layer (30), and the base film layer (22) of the discrete negative electrode plate is cut in such a way that the length of the base film layer (22) is equal to the length of the active material layer (30).

14. The electrode assembly (5) according to any one of claims 9 to 13, wherein the electrode assembly (5) is configured to: bend a part, overlaid with neither the metal layer (24) nor the active material layer (30), of the base film layer (22) of the positive electrode plate (11), bend a part, overlaid with neither the metal layer (24) nor the active material layer (30), of the base film layer (22) of the negative electrode plate (31), so that a part, overlaid with both the metal layer (24) and the active material layer (30), of the positive electrode plate (11) and a part, overlaid with both the metal layer (24) and the active material layer (30), of the negative electrode plate (31) are stacked alternately.

15. The electrode assembly (5) according to claim 13, wherein a length of a part, overlaid with both the metal layer (24) and the active material layer (30), of the positive electrode plate (11) is less than or equal to a length of a part, overlaid with both the metal layer (24) and the active material layer (30), of the negative electrode plate (31).

16. A battery cell, comprising:
a housing; and
the electrode assembly (5) according to any one of claims 9 to 15, wherein the electrode assembly (5) is disposed in the housing.

17. A battery, comprising the battery cell according to claim 16.

18. An electrical device, comprising the battery cell according to claim 16, and/or the battery according to claim 17 configured to provide electrical energy for the electrical device.
